# EUROPEAN PATENT APPLICATION

(11) **EP 2 660 914 A1**
(43) Date of publication of application: **06.11.2013**
(21) Application number: 11853595.4
(22) Date of filing: 27.12.2011
(51) Int. Cl.: H01M 8/04, H01M 8/10, H01M 8/12

(54) **FUEL CELL SYSTEM**

(30) Priority: 28.12.2010 JP 2010292362
(71) Applicant: JX Nippon Oil & Energy Corporation, Chiyoda-ku Tokyo 100-8162 (JP)
(72) Inventor: KAWAJI Yukihiro, Tokyo 100-8162 (JP); MIZUNO Yasushi, Tokyo 100-8162 (JP); YOKOYAMA Shou, Tokyo 100-8162 (JP)
(74) Representative: Grünecker, Kinkeldey, Stockmair & Schwanhäusser
(86) International application number: PCT/JP2011/080261
(87) International publication number: WO 2012/091031

(57) **Abstract**

A fuel cell system (1) includes: a power generating unit (22) including a cell stack (5) for performing power generation by using hydrogen-containing gas; a housing (21) for accommodating the power generating unit (22); an air introduction path (23) for introducing air to be supplied to a cathode of the cell stack (5), from an outside of the housing (21) to an inside of the housing (21); an air flow path (24) for causing air introduced to the inside of the housing (21) through the air introduction path (23) to flow in the inside of the housing (21), and to transfer heat from the power generating unit (22) to the air so as to cool the power generating unit (22); a blower (25) provided downstream of the air flow path (24) so as to supply air to the cathode; and an air supply path (29) provided downstream from the blower (25) so as to cause air to be supplied to the cathode by the blower (25) to flow.

## Description

### Technical Field

The present invention relates to a fuel cell system.

### Background Art

As an example of a conventional fuel cell system, Patent Literature 1, for example, discloses a fuel cell system that includes a power generating unit including a cell stack, a housing that accommodates the power generating unit, a fan that introduces air from the outside of the housing to the inside of the housing, and a blower that supplies the air to the cathode of the cell stack. In this fuel cell system, ventilation and cooling of the inside of the housing are realized by introducing air from the outside of the housing to the inside of the housing.

### Citation List

### Patent Literature

Patent Literature 1: Japanese Patent Application Laid-open No. 2007-207441

### Summary of Invention

### Technical Problem

However, such a housing that accommodates the power generating unit as described above may be required to have air-tightness from the perspective of, for example, installing the fuel cell system in a facility. Specifically, in some cases, introduction of gas into the housing from a path other than an exclusive gas introduction path and discharge of gas from the housing through a path other than an exclusive gas discharge path are not allowed. In such cases, a fan that introduces air from the outside of the housing to the inside of the housing cannot be provided in the housing.

Therefore, an object of the present invention is to provide a fuel cell system capable of efficiently cooling a power generating unit accommodated in a housing even if the housing that accommodates the power generating unit has air-tightness.

### Solution to Problem

According to an aspect of the present invention, there is provided a fuel cell system including: a power generating unit including a cell stack for performing power generation by using hydrogen-containing gas; a housing for accommodating the power generating unit; an air introduction path for introducing air to be supplied to a cathode of the cell stack, from an outside of the housing to an inside of the housing; an air flow path for causing the air introduced to the inside of the housing through the air introduction path to flow in the inside of the housing, and to transfer heat from the power generating unit to the air so as to cool the power generating unit; a blower provided downstream of the air flow path so as to supply the air to the cathode; and an air supply path provided downstream from the blower so as to cause the air to be supplied to the cathode by the blower to flow.

### Advantageous Effects of Invention

In this fuel cell system, air is introduced from the outside of the housing to the inside of the housing through the air introduction path, and the heat is transferred from the power generating unit to the air that flow in the air flow path in the housing. Further, the flow of the air in the air introduction path, the air flow path, and the air supply path is generated by the blower that supplies air to the cathode. Thus, according to this fuel cell system, it is possible to efficiently cool the power generating unit accommodated in the housing if when the housing accommodating the power generating unit has air-tightness. The air-tightness means such properties that the housing is tightly sealed against outside air other than gas that is to be introduced into the housing (air or the like introduced from the outside of the housing to the inside of the housing through the air introduction path). More specifically, the housing having air-tightness means a housing in which introduction of gas into the housing is realized through an exclusive gas introduction path and discharge of gas from the housing is realized through an exclusive gas discharge path.

### Brief Description of Drawings

Fig. 1 is a block diagram of a fuel cell system according to a first embodiment of the present invention.
Fig. 2 is a conceptual diagram of the fuel cell system according to the first embodiment of the present invention.
Fig. 3 is a conceptual diagram of a fuel cell system according to a second embodiment of the present invention.
Fig. 4 is a conceptual diagram of a modification of the fuel cell system according to the second embodiment of the present invention.
Fig. 5 is a conceptual diagram of a fuel cell system according to a third embodiment of the present invention.
Fig. 6 is a conceptual diagram of a fuel cell system according to a fourth embodiment of the present invention.

### Description of Embodiments

Hereinafter, preferred embodiments of the present invention will be described in detail with reference to the drawings. In the drawings, the same or corresponding portions will be denoted by the same reference numerals and redundant description thereof will not be provided.

### [First Embodiment]

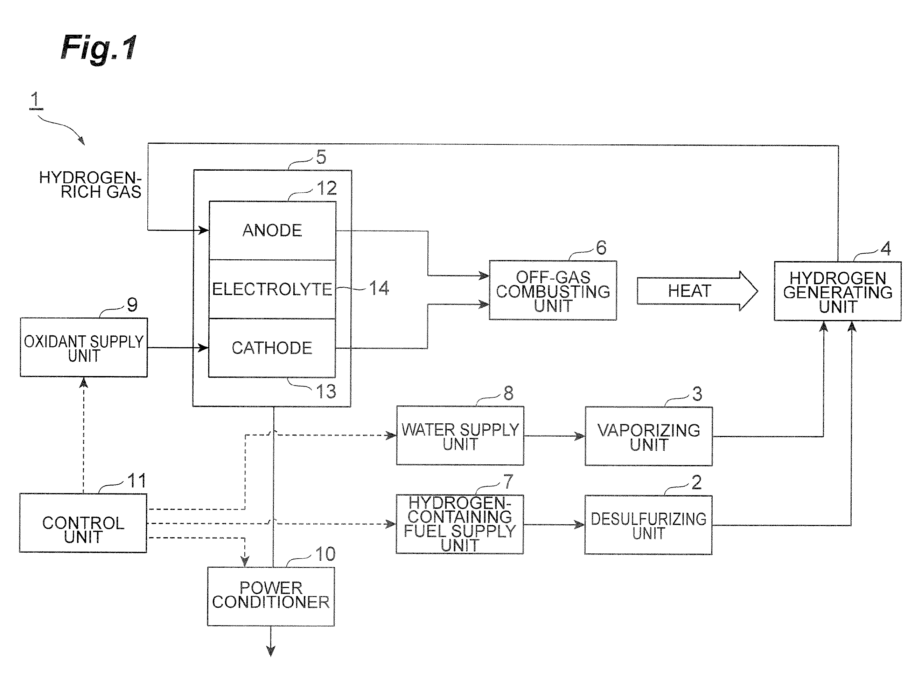

As shown in Fig. 1, a fuel cell system 1 includes a desulfurizing unit 2, a vaporizing unit 3, a hydrogen generating unit 4, a cell stack 5, an off-gas combusting unit 6, a hydrogen-containing fuel supply unit 7, a water supply unit 8, an oxidant supply unit 9, a power conditioner 10, and a control unit 11. In the fuel cell system 1, the cell stack 5 performs power generation using hydrogen-containing fuel and oxidant. The type of the cell stack 5 in the fuel cell system 1 is not particularly limited, and for example, a polymer electrolyte fuel cell (PEFC), a solid oxide fuel cell (SOFC), a phosphoric acid fuel cell (PAFC), a molten carbonate fuel cell (MCFC), and other types of fuel cells can be used. The constituent components shown in Fig. 1 may be appropriately omitted depending on the type of the cell stack 5, the type of hydrogen-containing fuel, a reforming method, and the like.

As the hydrogen-containing fuel, hydrocarbon-based fuel is used, for example. As the hydrocarbon-based fuel, compounds containing carbon and hydrogen (the compounds may contain other elements such as oxygen) in their molecules and mixtures thereof are used. Examples of the hydrocarbon-based fuel include hydrocarbons, alcohols, ethers, and biofuel, and hydrocarbon-based fuels that originate from existing fossil fuels such as petroleum or coal, that originate from synthetic fuels such as synthetic gas, and that originate from biomass can be appropriately used. Specifically, examples of hydrocarbons include methane, ethane, propane, butane, natural gas, liquefied petroleum gas (LPG), city gas, town gas, gasoline, naphtha, kerosene, and gas oil. Examples of alcohols include methanol and ethanol. Examples of ethers include dimethyl ether. Examples of biofuel include biogas, bioethanol, biodiesel, and bio jet.

As the oxidant, air, pure oxygen gas (may contain impurities that are rarely removed by a general removal method), and oxygen-enriched air are used.

The desulfurizing unit 2 desulfurizes the hydrogen-containing fuel supplied to the hydrogen generating unit 4. The desulfurizing unit 2 has a desulfurizing catalyst for removing sulfurated compounds contained in the hydrogen-containing fuel. As a desulfurization method of the desulfurizing unit 2, an adsorptive desulfurization method of adsorbing and removing sulfurated compounds and a hydrodesulfurization method of allowing sulfurated compounds to react with hydrogen to remove the sulfurated compounds are used, for example. The desulfurizing unit 2 supplies the desulfurized hydrogen-containing fuel to the hydrogen generating unit 4.

The vaporizing unit 3 generates steam supplied to the hydrogen generating unit 4 by heating and vaporizing water. When water is heated by the vaporizing unit 3, heat generated within the fuel cell system 1 such as heat of the hydrogen generating unit 4, heat of the off-gas combusting unit 6, or heat recovered from exhaust gas may be used. Moreover, water may be heated using additional heat sources such as a heater or a burner. Although only the heat supplied from the off-gas combusting unit 6 to the hydrogen generating unit 4 is illustrated as an example in Fig. 1, the present invention is not limited to this. The vaporizing unit 3 supplies the generated steam to the hydrogen generating unit 4.

The hydrogen generating unit 4 generates hydrogen-rich gas using the hydrogen-containing fuel from the desulfurizing unit 2. The hydrogen generating unit 4 has a reformer that reforms the hydrogen-containing fuel using a reforming catalyst. A reforming method used in the hydrogen generating unit 4 is not particularly limited, and for example, steam reforming, partial oxidation reforming, autothermal reforming, and other reforming methods can be used. The hydrogen generating unit 4 may include a configuration for adjusting properties in addition to the reformer that reforms the hydrogen-containing fuel using the reforming catalyst depending on the properties of the hydrogen-rich gas required for the cell stack 5. For example, when the type of the cell stack 5 is a polymer electrolyte fuel cell (PEFC) or a phosphoric acid fuel cell (PAFC), the hydrogen generating unit 4 includes a configuration (for example, a shift reactor and a selective oxidation reactor) for removing carbon monoxides in the hydrogen-rich gas. The hydrogen generating unit 4 supplies the hydrogen-rich gas to an anode 12 of the cell stack 5.

The cell stack 5 performs power generation using the hydrogen-rich gas from the hydrogen generating unit 4 and the oxidant from the oxidant supply unit 9. The cell stack 5 includes the anode 12 to which the hydrogen-rich gas is supplied, a cathode 13 to which the oxidant is supplied, and an electrolyte 14 disposed between the anode 12 and the cathode 13. The cell stack 5 supplies electric power to the outside via the power conditioner 10. The cell stack 5 supplies hydrogen-rich gas and oxidant that were not used for power generation to the off-gas combusting unit 6 as off-gas. A combusting unit (for example, a combustor or the like that heats the reformer) included in the hydrogen generating unit 4 may be used as the off-gas combusting unit 6.

The off-gas combusting unit 6 combusts the off-gas supplied from the cell stack 5. The heat generated by the off-gas combusting unit 6 is supplied to the hydrogen generating unit 4 and is used for generation of the hydrogen-rich gas in the hydrogen generating unit 4.

The hydrogen-containing fuel supply unit 7 supplies the hydrogen-containing fuel to the desulfurizing unit 2. The water supply unit 8 supplies water to the vaporizing unit 3. The oxidant supply unit 9 supplies the oxidant to the cathode 13 of the cell stack 5. The hydrogen-containing fuel supply unit 7, the water supply unit 8, and the oxidant supply unit 9 are configured as a pump, for example, and are driven based on a control signal from the control unit 11.

The power conditioner 10 adjusts the electric power from the cell stack 5 according to a power consumption state on the outside. The power conditioner 10 performs a process of converting a voltage and a process of converting a DC power into an AC power, for example.

When hydrogen-containing fuel (for example, pure hydrogen gas, hydrogen-enriched gas, and the like) that does not require a reforming treatment is supplied by the hydrogen-containing fuel supply unit 7, one or a plurality of the desulfurizing unit 2, the water supply unit 8, the vaporizing unit 3, and the hydrogen generating unit 4 may not be provided.

The control unit 11 performs a process of controlling the entire fuel cell system 1. The control unit 11 is configured as a device that includes a central processing unit (CPU), a read only memory (ROM), a random access memory (RAM), and an input/output interface. The control unit 11 is electrically connected to the hydrogen-containing fuel supply unit 7, the water supply unit 8, the oxidant supply unit 9, the power conditioner 10, and other sensors and auxiliary devices (not shown). The control unit 11 gets various signals generated within the fuel cell system 1 and outputs a control signal to respective devices in the fuel cell system 1.

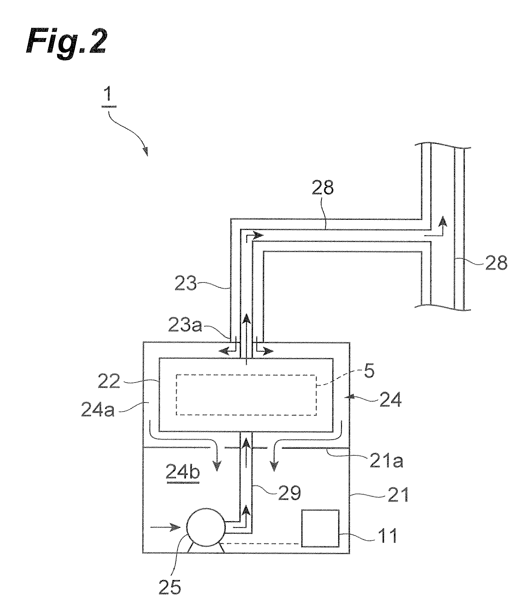

As shown in Fig. 2, the fuel cell system 1 includes a housing 21 having air-tightness with respect to outside air. The housing 21 accommodates the above-described devices including the power generating unit 22. The power generating unit 22 is a module that includes the cell stack 5 that generates power by using the hydrogen-rich gas (hydrogen-containing gas). The power generating unit 22 includes at least the cell stack 5 and may further include the off-gas combusting unit 6, the hydrogen generating unit 4, and the like, and may not include the off-gas combusting unit 6, the hydrogen generating unit 4, and the like.

An air introduction path 23 is connected to the housing 21. The air introduction path 23 is used for introducing air to be supplied to the cathode 13 of the cell stack 5, from the outside of the housing 21 to the inside of the housing 21. A downstream end 23a of the air introduction path 23 is connected to an upper portion (in this example, an upper wall of the housing 21) of the housing 21 so as to directly face the power generating unit 22.

An air flow path 24 that includes air flow paths 24a and 24b is formed in the housing 21. The air flow path 24a is formed on an upper side of a partitioning member 21a in the housing 21 so as to surround the power generating unit 22. The air flow path 24b is formed on a lower side of the partitioning member 21 a in the housing 21 so as to be located downstream of the air flow path 24a. The air flow path 24 is used for causing air introduced into the housing 21 through the air introduction path 23 to flow in the housing 21 to thereby transfer heat from the power generating unit 22 to the air to cool the power generating unit 22.

Further, a blower 25 that corresponds to the oxidant supply unit 9 described above is accommodated in the housing 21. The blower 25 is provided downstream of the air flow path 24b so as to supply the air introduced into the housing 21 through the air introduction path 23 to the cathode 13 of the cell stack 5. The air to be supplied to the cathode 13 by the blower 25 flows an air supply path 29 that is provided downstream from the blower 25. The flow of air in the air introduction path 23, the air flow path 24, and the air supply path 29 is generated by the blower 25.

The combustion gas (that is, the exhaust gas from the off-gas combusting unit 6) of the off-gas discharged from the cell stack 5 is discharged outside the housing 21 through the combustion gas discharge path 28. The combustion gas discharge path 28 flows through the air introduction path 23, and the combustion gas discharge path 28 and the air introduction path 23 form a duplex pipe.

As described above, in the fuel cell system 1, air is introduced from the outside of the housing 21 to the inside of the housing 21 through the air introduction path 23. In this case, the downstream end 23a of the air introduction path 23 is connected to the housing 21 so as to directly face the power generating unit 22. That is, the downstream end 23a of the air introduction path 23 is connected to the housing 21 so that the power generating unit 22 is positioned on a central line of an opening of the downstream end 23a. Thus, the air introduced into the housing 21 is first blown to the power generating unit 22, and the power generating unit 22 is cooled. In this case, since the downstream end 23a of the air introduction path 23 is connected to the upper portion of the housing 21 so as to directly face the power generating unit 22, it is possible to effectively cool the power generating unit 22. In the housing 21, the heat is transferred from the power generating unit 22 to the air flowing in the air flow path 24, and the power generating unit 22 is further cooled. Further, the flow of the air in the air introduction path 23, the air flow path 24, and the air supply path 29 is generated by the blower 25 that supplies air to the cathode 13 of the cell stack 5 (that is, it is not necessary to provide an additional auxiliary device or the like for generating the flow of air). Thus, according to the fuel cell system 1, it is possible to efficiently cool the power generating unit 22 that is accommodated in the housing 21 having air-tightness (such properties that the housing 21 is tightly sealed against outside air other than gas that is to be introduced into the housing 21 (air or the like introduced from the outside of the housing 21 to the inside of the housing 21 through the air introduction path 23)). On the other hand, since air is heated in the air flow path 24, the heated air is supplied to the cathode 13 of the cell stack 5 so that the power generation efficiency of the cell stack 5 can be improved.

Moreover, even if the blower 25 is stopped due to a certain reason, since the downstream end 23a of the air introduction path 23 is connected to the upper portion of the housing 21, hot air can be easily introduced into the air introduction path 23. In this manner, it is possible to smoothly and reliably discharge hot air from the inside of the housing 21 to the outside of the housing 21 through the air introduction path 23.

### [Second Embodiment]

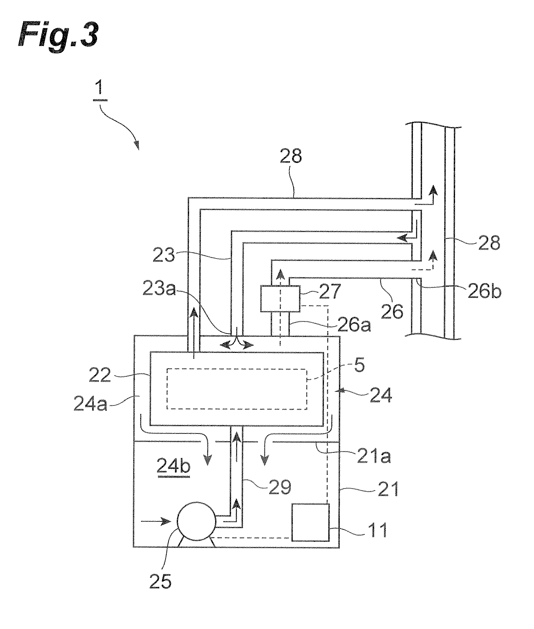

As shown in Fig. 3, the fuel cell system 1 according to the second embodiment is mainly different from the fuel cell system 1 according to the first embodiment in that a first air discharge path 26 is provided. In the fuel cell system 1 according to the second embodiment, the first air discharge path 26 is connected to the housing 21. An upstream end 26a of the first air discharge path 26 is connected to an upper portion (in this example, an upper wall of the housing 21) of the housing 21. On the other hand, a downstream end 26b of the first air discharge path 26 is connected halfway to the combustion gas discharge path 28. In this manner, the air flowing in the first air discharge path 26 flows into the combustion gas discharge path 28.

A first opening/closing unit 27 (for example, an electromagnetic valve) that opens and closes the first air discharge path 26 is attached to the first air discharge path 26. The first opening/closing unit 27 is controlled by the control unit 11 (alternatively, an external control unit) so that the first air discharge path 26 is closed when the blower 25 operates and that the first air discharge path 26 is opened when the blower 25 is stopped due to a certain reason. Moreover, when the first air discharge path 26 is opened by the first opening/closing unit 27, the air introduced from the outside of the housing 21 to the inside of the housing 21 through the air introduction path 23 is discharged from the inside of the housing 21 to the outside of the housing 21 through the first air discharge path 26.

In this manner, the first opening/closing unit 27 closes the first air discharge path 26 when the blower 25 operates, and the first opening/closing unit 27 opens the first air discharge path 26 when the blower 25 is stopped due to a certain reason. Thus, in a fuel cell system where a portion of the air introduction path 23 is shared by another device and sucking force of the other device is strong, and in a fuel cell system where a backflow prevention valve is attached to the air introduction path 23, it is possible to reliably discharge hot air from the inside of the housing 21 to the outside of the housing 21 through the first air discharge path 26 during emergency stop of the blower 25 and emergency stop of the fuel cell system 1.

Moreover, since the upstream end 26a of the first air discharge path 26 is connected to the upper portion of the housing 21, when the first opening/closing unit 27 opens the first air discharge path 26, hot air can be easily introduced into the first air discharge path 26. In this manner, it is possible to smoothly and reliably discharge hot air through the first air discharge path 26 when the first opening/closing unit 27 opens the first air discharge path 26.

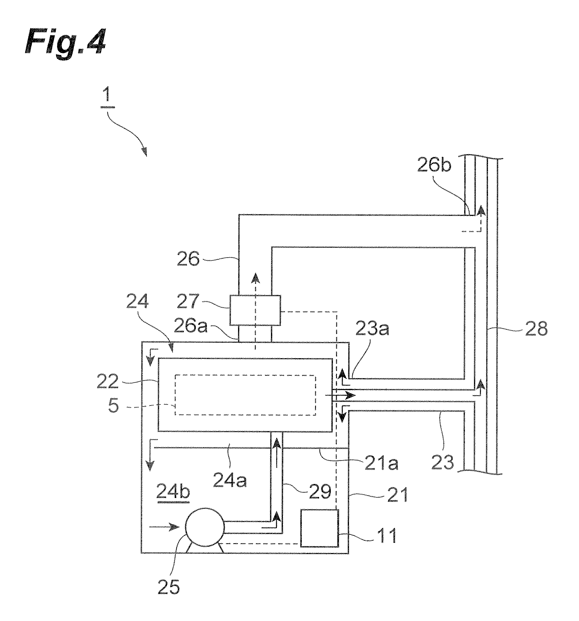

As shown in Fig. 4, the downstream end 23a of the air introduction path 23 may be connected to a side portion (in this example, a side wall of the housing 21) of the housing 21 if the downstream end 23a directly faces the power generating unit 22. In this case, the blower 25 is provided downstream of the air flow path 24b, and supplies the air introduced into the housing 21 through the air introduction path 23 to the cathode 13 of the cell stack 5.

### [Third Embodiment]

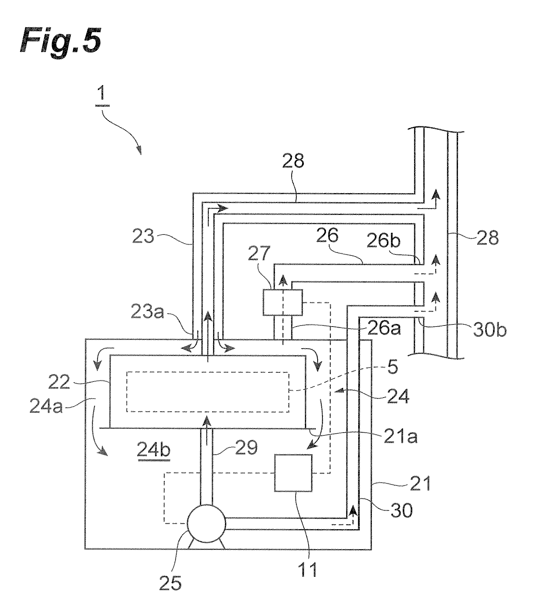

As shown in Fig. 5, the fuel cell system 1 according to the third embodiment is mainly different from the fuel cell system 1 according to the second embodiment in that a second air discharge path 30 is provided in addition to the first air discharge path 26. In the fuel cell system 1 according to the third embodiment, a flow path formed downstream from the blower 25 branches into an air supply path 29 and a second air discharge path 30. The second air discharge path 30 has a downstream end 30b connected to the combustion gas discharge path 28 so as to communicate with the combustion gas discharge path 28. In this manner, the air flowing in the second air discharge path 30 flows into the combustion gas discharge path 28. The second air discharge path 30 may have the downstream end 30b connected to a portion of the first air discharge path 26 located downstream from the first opening/closing unit 27 so as to communicate with the combustion gas discharge path 28.

In this manner, air required for power generation among the air introduced into the housing 21 by the blower 25 is supplied to the power generating unit 22, and surplus air is discharged to the outside through the second air discharge path 30. Thus, since the amount of air introduced into the housing 21 from the air introduction path 23 is not limited to the amount of air provided for power generation, it is possible to effectively cool the inside of the housing 21. Moreover, since the surplus air in the housing 21 is discharged to the outside through the second air discharge path 30, it is possible to suppress an excessive increase in the pressure inside the housing 21 even if the housing 21 that accommodates the power generating unit 22 has air-tightness.

### [Fourth Embodiment]

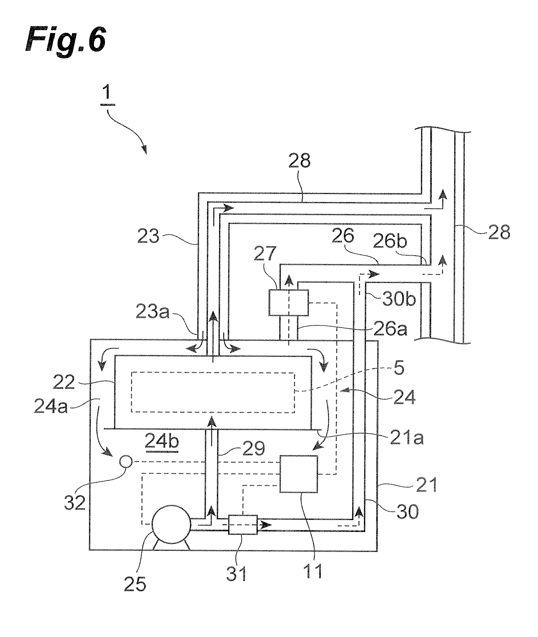

As shown in Fig. 6, the fuel cell system 1 according to the fourth embodiment is mainly different from the fuel cell system 1 according to the third embodiment, in that a second opening/closing unit 31 (for example, an electromagnetic valve) and a temperature measuring unit 32 are provided. In the fuel cell system 1 according to the fourth embodiment, the second air discharge path 30 has a downstream end 30b connected to a portion of the first air discharge path 26 located downstream from the first opening/closing unit 27 so as to communicate with the combustion gas discharge path 28. In this manner, the air flowing in the second air discharge path 30 flows into the combustion gas discharge path 28. The second air discharge path 30 may have the downstream end 30b connected to the combustion gas discharge path 28 so as to communicate with the combustion gas discharge path 28.

The temperature measuring unit 32 measures the temperature inside the housing 21. The second opening/closing unit 31 is provided in the second air discharge path 30 so as to open and close the second air discharge path 30. The control unit 11 gets the temperature inside the housing 21 measured by the temperature measuring unit 32. Moreover, when the temperature gotten from the temperature measuring unit 32 exceeds a predetermined temperature, the control unit 11 controls the blower 25 so that the amount of air introduced into the housing 21 is increased to be larger than the amount of air required for power generation and also controls the second opening/closing unit 31 so that the second air discharge path 30 is opened. On the other hand, when the temperature gotten from the temperature measuring unit 32 is equal to or lower than the predetermined temperature, the control unit 11 controls the blower 25 so that the amount of air introduced into the housing 21 is equal to the amount of air required for power generation and also controls the second opening/closing unit 31 so that the second air discharge path 30 is closed.

In this manner, the amount of air introduced into the housing 21 by the blower 25 is increased only when the temperature inside the housing 21 exceeds the predetermined temperature, whereby the surplus air in the housing 21 can be discharged to the outside through the second air discharge path 30. Moreover, when the temperature inside the housing 21 is equal to or lower than the predetermined temperature, the air heated by the power generating unit 22 is supplied as the cathode air of the power generating unit 22, whereby a decrease in the power generation efficiency of the fuel cell system 1 can be suppressed.

The temperature measuring unit 32 may be provided at an optional place if it is inside the housing 21. For example, the temperature measuring unit 32 may be provided on an upper surface of the power generating unit 22 where hot air is likely to gather or near the power conditioner 10 which is relatively easily influenced by an ambient temperature among the auxiliary devices that constitute the fuel cell system 1.

While an embodiment of the present invention has been described, the present invention is not limited to the above embodiment. For example, the housing 21 may not have air-tightness. In this case, since it is not necessary to provide, in the housing 21, additional means such as a fan, for introducing air from the outside of the housing 21 to the inside of the housing 21, it is possible to simplify the structure of the fuel cell system 1.

Moreover, in the fuel cell system 1 shown in Figs. 2, 4, 5, and 6, although the combustion gas discharge path 28 and the air introduction path 23 form a duplex pipe, the combustion gas discharge path 28 and the air introduction path 23 may be provided separately as shown in Fig. 3.

That is, the present invention is not limited to a fuel cell system having a configuration in which the combustion gas discharge path 28 flows through the air introduction path 23, the combustion gas discharge path 28 and the air introduction path 23 form a duplex pipe, and the downstream end of the air introduction path 23 and the upstream end of the combustion gas discharge path 28 are connected to the upper portion of the housing 21.

Specifically, as shown in Fig. 3, the present invention can be applied to a fuel cell system having a configuration in which the combustion gas discharge path 28 and the air introduction path 23 do not form a duplex pipe but are provided separately. Moreover, as shown in Fig. 4, the present invention can be applied to a fuel cell system having a configuration in which the downstream end of the air introduction path 23 and the upstream end of the combustion gas discharge path 28 are connected to a side portion of the housing 21.

Moreover, in the third and fourth embodiments, a flow meter may be provided on the air supply path 29, and the amount of cathode air may be adjusted by controlling the blower 25 in a feedback manner. Further, output map data determined based on an air distribution ratio between the air supply path 29 and the second air discharge path 30 may be stored in the control unit 11, and the cathode air flow rate may be adjusted by controlling the blower 25 based on the data. Furthermore, the air supply path 29 and the second air discharge path 30 may branch off from the blower 25 as shown in Fig. 5, and one path may branch off from the other path as shown in Fig. 6. The second opening/closing unit 31 in the fourth embodiment is not limited to an opening/closing unit which is completely opened or closed, but the degree of opening may be set in multiple steps.

### Industrial Applicability

According to the present invention, it is possible to efficiently cool the power generating unit accommodated in the housing.

### Reference Signs List

- 1:: fuel cell system
- 5:: cell stack
- 13:: cathode
- 21:: housing
- 22:: power generating unit
- 23:: air introduction path
- 23a:: downstream end
- 24, 24a, 24b:: air flow path
- 25:: blower
- 26:: first air discharge path
- 26a:: upstream end
- 27:: first opening/closing unit
- 28:: combustion gas discharge path
- 29:: air supply path
- 30:: second air discharge path
- 31:: second opening/closing unit
- 32:: temperature measuring unit

## Claims

1. A fuel cell system comprising:
a power generating unit including a cell stack for performing power generation by using hydrogen-containing gas;
a housing for accommodating the power generating unit;
an air introduction path for introducing air to be supplied to a cathode of the cell stack, from an outside of the housing to an inside of the housing;
an air flow path for causing the air introduced to the inside of the housing through the air introduction path to flow in the inside of the housing, and to transfer heat from the power generating unit to the air so as to cool the power generating unit;
a blower provided downstream of the air flow path so as to supply the air to the cathode; and
an air supply path provided downstream from the blower so as to cause the air to be supplied to the cathode by the blower to flow.

2. The fuel cell system according to claim 1, wherein
a downstream end of the air introduction path is connected to the housing so as to directly face the power generating unit.

3. The fuel cell system according to claim 1 or 2, further comprising:
a combustion gas discharge path for discharging combustion gas discharged from the power generating unit;
a first air discharge path for discharging the air introduced to the inside of the housing through the air introduction path, from the inside of the housing to the outside of the housing;
a first opening/closing unit provided in the first air discharge path so as to open and close the first air discharge path; and
a control unit for controlling the first opening/closing unit, wherein
the air flowing in the first air discharge path flows into the combustion gas discharge path.

4. The fuel cell system according to claim 3, wherein
the control unit controls the first opening/closing unit so that the first air discharge path is opened when the blower is stopped.

5. The fuel cell system according to claim 3 or 4, wherein
an upstream end of the first air discharge path is connected to an upper portion of the housing.

6. The fuel cell system according to any one of claims 3 to 5, further comprising:
a second air discharge path provided downstream from the blower so as to discharge the air introduced to the inside of the housing through the air introduction path, from the inside of the housing to the outside of the housing, wherein
the air flowing in the second air discharge path flows into the combustion gas discharge path.

7. The fuel cell system according to claim 6, wherein
a downstream end of the second air discharge path is connected to the first air discharge path downstream from the first opening/closing unit.

8. The fuel cell system according to claim 6 or 7, further comprising:
a temperature measuring unit for measuring a temperature of the inside of the housing; and
a second opening/closing unit provided in the second air discharge path so as to open and close the second air discharge path, wherein
when the temperature of the inside of the housing measured by the temperature measuring unit exceeds a predetermined temperature, the control unit controls the second opening/closing unit so that the second air discharge path is opened and also controls the blower so that an amount of the air to be introduced to the inside of the housing increases.
